# EUROPEAN PATENT SPECIFICATION

(11) **EP 4 314 669 B1**
(45) Date of publication and mention of the grant of the patent: **25.02.2026**
(21) Application number: 21934722.6
(22) Date of filing: 30.03.2021
(51) Int. Cl.: F24T 10/17, F24T 10/00, F16L 1/028, F16L 9/18, F16L 11/12, F16L 11/20

(54) **OUTER PIPE AND METHOD FOR COAXIAL GEOTHERMAL COLLECTOR**
AUSSENROHR UND VERFAHREN FÜR KOAXIALEN GEOTHERMISCHEN KOLLEKTOR
TUYAU EXTERNE ET PROCÉDÉ POUR COLLECTEUR GÉOTHERMIQUE COAXIAL

(43) Date of publication of application: 07.02.2024
(73) Proprietor: Senera Oy, 01380 Vantaa (FI)
(72) Inventor: MANNER, Mika, 02330 Espoo (FI)
(74) Representative: Papula Oy
(86) International application number: PCT/FI2021/050233
(87) International publication number: WO 2022/207957

(56) References cited:
- EP-A1- 3 603 945
- EP-B1- 1 147 348
- WO-A1-2021/094644
- SE-C2- 523 349
- US-A1- 2015 068 740
- US-A1- 2015 068 740
- US-A1- 2016 018 133
- US-A1- 2016 018 133
- US-A1- 2019 154 307

## Description

The invention relates to coaxial geothermal collectors, especially to outer pipes for such, which outer pipes are installable into a borehole serving as a heat well.

### BACKGROUND OF THE INVENTION

Recently, an increasing interest has been raised on coaxial geothermal collectors. A coaxial collector with two concentric pipes is in many aspects a preferred choice in comparison to conventional U collectors with two pipes running parallel, side by side.

As the depth of heat wells formed as holes bored in the bedrock is increasing, special attention shall be paid to the installability of the collector piping into the heat well. This is especially due to the fact that the outer pipe of the coaxial collector is typically dimensioned so as to fill as large portion of the borehole as possible, and to even be set against the wall of the borehole. Such close dimensioning means, for example, that contacts between the wall of the borehole and the outer pipe during installation may make the installation challenging and even damage the outer pipe.

Such challenges are emphasized as the well depths are continuously increasing, and depths of even 800 to 1000 meters are possible.

US 2016/0018133 A1 discloses a principle of facilitating the installation by using an outer pipe which may be shaped, for the installation, into a folded shape having a maximum diameter smaller than the diameter of the normal, non-shaped circular open use shape of the outer pipe.

Also when utilizing such smaller installation shape, the outer pipe may be rubbed against the walls of the heat well during the installation.

### SUMMARY

In one aspect, an outer pipe for a coaxial geothermal collector to be installed into a heat well bored in the bedrock is disclosed. The outer pipe has a pipe wall which may be formed of a crystallized plastic material and it is configured to be inserted into a heat well bored in the bedrock while being folded into a folded installation shape Sᵢ with a substantially non-circular cross section, and to be opened in the heat well into an open use shape Sᵤ with a substantially circular cross section where the pipe wall substantially follows a circle having a circle diameter D_{C}. The pipe wall has, in the folded installation shape, a maximum diameter Dₘₐₓ which is smaller than the circle diameter, and comprises at least one inwards folded pipe wall section folded inwards towards an opposite pipe wall section such that the shortest distance Dₘᵢₙ between the inwards folded pipe wall section and the opposite pipe wall section is less than or equal to 50 % of the circle diameter. Optionally, the pipe wall further comprises one or more elongated recesses extending in the longitudinal direction of the outer pipe, at which recess the cross-section of the outer pipe in its open use shape deviates locally inwards.

Said optionality means that there are two alternative implementations with regard to such recesses: an outer pipe with a pipe wall comprising one or more such recesses, and an outer pipe without any such recess.

Outside any recesses possibly existing in the pipe wall, the at least one inwards folded pipe wall section has a first pipe wall thickness T₁ and the pipe wall has, outside the inwards folded pipe wall section, a second pipe wall thickness T₂ which is higher than the first pipe wall thickness for improving the wear resistance of the part of the pipe wall susceptible to being rubbed against the bedrock during the installation of the outer pipe into the heat well.

Thus, if the pipe wall comprises one or more recesses in the inwards folded pipe wall section, the first pipe wall thickness is defined outside any of such recesses. In embodiments without any recesses in the pipe wall in the inwards folded pipe wall section, the first pipe wall thickness may be defined anywhere in the inwards folded pipe wall section.

In one embodiment, the cross section of the folded installation shape is substantially in the form of a letter C or U.

In one embodiment, the cross section of the folded installation shape has, outside the at least one inwards folded pipe wall section, a substantially constant thickness.

In one embodiment, the pipe wall has, outside the inwards folded pipe wall section, an outwards extending protuberance locally increasing the pipe wall thickness. The protuberance may extend as an elongated structure in the longitudinal direction of the outer pipe.

In one embodiment, the pipe wall has, outside the inwards folded pipe wall section, a strengthening section with a pipe wall thickness exceeding the first pipe wall thickness.

In any of the above embodiments, the outer pipe may be initially manufactured into the open use shape by extruding.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention.
Figures 1 illustrates an outer pipe for a coaxial geothermal collector and a geothermal collector;
Figures 2 to 4 illustrate outer pipes for a coaxial geothermal collector; and
Figure 5 illustrates a method for installing a coaxial geothermal collector in a heat well.

The drawings of the Figures are schematic and not drawn to scale.

### DETAILED DESCRIPTION

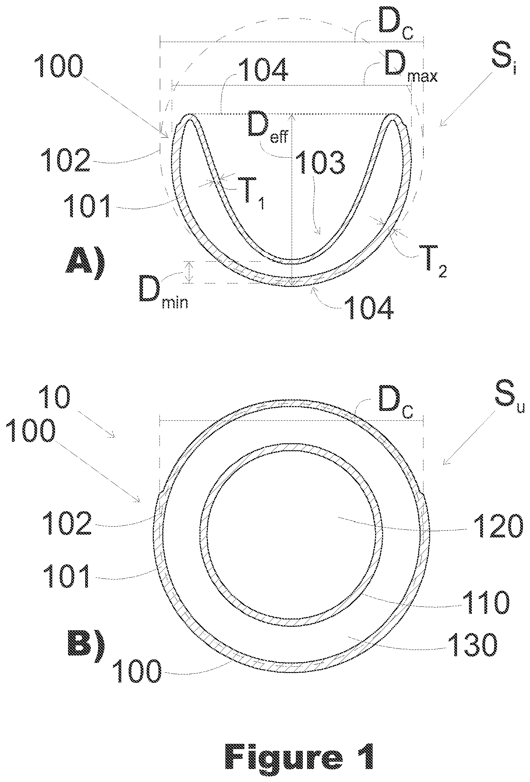

The drawings A) and B) of Figure 1 show cross sections of a pipe 100 to be used as an outer pipe of a coaxial geothermal collector installed into a borehole formed in the bedrock, the borehole serving as a heat well. Hereinafter, the pipe is accordingly called an "outer pipe".

A coaxial geothermal collector refers generally to a collector configuration comprising an outer pipe and an inner pipe positioned substantially coaxially within the outer pipe. Drawing B) of Figure 1 illustrates this kind of coaxial geothermal collector 10 implemented by inserting an inner pipe 110 within the outer pipe 100. Thereby, an inner flow channel 120 is formed by the inner pipe and an outer flow channel 130 is formed between the inner pipe 110 and the outer pipe 100. The inner and outer flow channels together form a coaxial flow channel where a heat transfer liquid may flow upwards or downwards via the inner flow channel and downwards or upwards, respectively, via the outer flow channel.

In such configuration, the outer pipe thus forms the outer shell of the coaxial collector.

The outer pipe 100 of Figure 1 may be used in an open or in a closed coaxial geothermal collector.

"Closed" refers to the entire coaxial flow channel being defined by the inner and outer pipe without any part of the channel being defined by the borehole. This is implemented by the outer pipe 100 being closed at its lower end. The inner pipe 110 is, instead, open at its both ends to allow a heat transfer liquid, or generally a heat transfer fluid, to flow through it.

In an "open" coaxial geothermal collector, the outer pipe is open at its lower end so that the borehole itself defines and limits the (outer) flow channel at the lower part of the heat well.

The expressions "lower" and "upper" refer in this specification to the upwards and downwards directions of a coaxial collector when assembled or in use in a normal way in a substantially vertical heat well. A "lower end" or an "upper end" of the collector of a part thereof, for example, refers to the collector to be designed to be used with such lower and upped ends and facing towards the bottom and the top, respectively, of the borehole. Between manufacturing and assembling, such lower and bottom ends may of course lie in any positions relative to each other.

The outer pipe 100 may have any appropriate dimensions. The diameter of the outer pipe may be selected in accordance with the diameter of the heat wall into which the outer pipe is designed to be inserted. The diameter may be, for example, between 70 to 200 mm. Commonly used sizes nowadays include, for example, outer pipes designed for heat well diameters of 115 mm, 140 mm, and 165 mm.

The outer pipe has a pipe wall 101 which may be formed of a crystallized plastic material. "Crystallized", i.e. crystalline plastic material refers to a plastic material in which most, most preferably substantially all atoms, molecules or molecular chains are arranged according to the three-dimensional crystalline structure which is specific to the compound of the given material.

The outer pipe 100, thus its pipe wall 101, may be manufactured from any suitable, possibly crystallized plastic material such as polyethylene PE including various modifications thereof such as PEL (polyethylene, low density), PEM (polyethylene, medium density), PEH (polyethylene, high density) and PEX (crosslinked polyethylene).

As shown in Figure 1, the outer pipe 100 of the outer pipe has two different shapes. Drawing A) illustrates a folded installation shape Sᵢ with a substantially non-circular cross section. "Installation" shape refers to the outer pipe being configured and designed to be inserted into a heat well while being in this shape. Once installed into heat well in the form of a borehole in the bedrock, the outer pipe may be opened into an open use shape Sᵤ illustrated in drawing B). Then, an inner pipe may be inserted into the outer pipe to form the inner and outer flow channels.

In such opening, for example, pressurized and/or heated liquid supplied to the outer pipe may be utilized. Such liquid may be supplied to the outer pipe via the inner pipe which is inserted further into the outer pipe gradually as the outer pipe opens.

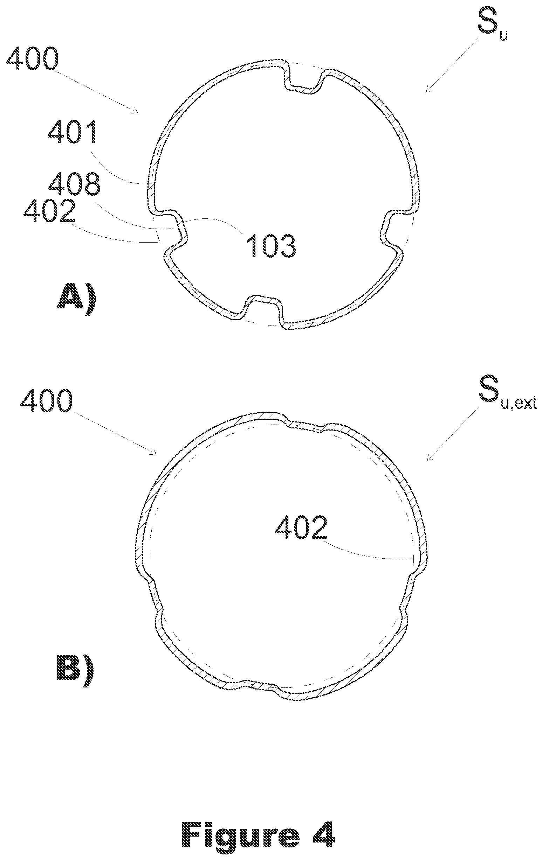

In its open use shape Sᵤ, the outer pipe has a substantially circular cross section where the pipe wall 101 substantially follows a circle 102 having a circle diameter D_{C}. The diameter of the pipe may then equal to the circle diameter. "Substantially" refers here to the substantially circular shape of the cross section. In the example of Figure 1, the entire pipe wall substantially follows the circle so that there are, for example, no recesses in the pipe wall where the cross-section of the outer pipe would deviate locally inwards. In other examples, such recesses may exist. Such recesses are illustrated in Figure 4. With such recesses, the major part of the pipe wall still follows the circle.

The open use shape may be the shape into which the outer pipe is initially manufactured, for example, by extruding. "Initial" manufacturing refers to the possibility of further processing the outer pipe after the initial manufacturing process so as to deform it into the folded installation shape. Such deforming may be carried out by any appropriate technique and process. It is possible, for example, to utilize thermoforming.

In the folded installation shape, the pipe wall has a maximum diameter Dₘₐₓ which is smaller than the circle diameter D_{C}. This may facilitate the insertion of the outer pipe into the heat well in result of increased space between the outer pipe and the wall of the borehole.

The folded installation shape is implemented by the pipe wall comprising an inwards folded pipe wall section 103 folded inwards towards an opposite pipe wall section 104. In the example of 1, the minimum distance Dₘᵢₙ between the inwards folded pipe wall section and the opposite pipe wall section is only about 10 % of the circle diameter. In other embodiments, the shortest distance between the inwards folded pipe wall section and the opposite pipe wall section may be anything less than or equal to 50 % of the circle diameter to ensure sufficiently compact outer dimensions of the outer pipe in its folded installation shape. The shortest distance may be even zero, wherein the inwards folded pipe wall section is thus in contact with the opposite pipe wall section.

The diameters as well as the distances mentioned above may be defined or measured, for example, at the center line (not illustrated) of the pipe wall in the cross section of the outer pipe. Alternatively, they may be defined or measured between positions at the outer or inner surface of the pipe wall.

In the example of Figure 1, the folding of the outer pipe results in the cross section of the folded installation shape of the outer pipe being substantially in the form of a letter C or U. In other embodiments, any other appropriate shapes or geometries are possible.

The cross section of the pipe wall in the folded installation shape has a non-concave effective perimeter line 105 which follows, outside the inwards folded pipe wall sections, the pipe wall and extends as a straight line over the inwards folded pipe wall section. The non-concave effective perimeter line defines the effective area which the cross section of the outer pipe covers in the folded installation shape. As illustrated in the drawing, in the direction in which the inwards folded pipe wall section extends towards the opposite pipe wall section, the diameter D_{eff} of that area is much smaller than the maximum diameter Dₘₐₓ of the pipe wall. This may further facilitate the insertion of the outer pipe into the heat well via decreased contacts between the outer pipe and the wall of the borehole.

On the other hand, the inwards folded pipe wall section 103 is encircled by, or enclosed within, the non-concave effective perimeter line 104. This means that the inwards folded pipe wall section thereby cannot come into contact with the wall of the round borehole during the insertion of the outer pipe into the heat well.

This is taken into account in an advantageous manner in the dimensioning of the pipe wall of the outer pipe.

The inwards folded pipe wall section has a first pipe wall thickness T₁. Outside the inwards folded pipe wall section, the pipe wall has a second pipe wall thickness T₂ which is higher than the first pipe wall thickness.

The higher second thickness may be selected to ensure sufficient rigidity of the pipe wall, taking into account possible rubbing of the outer pipe against the wall of the borehole. The lower first pipe wall thickness at the parts of the pipe wall where there is no need for such high rigidity may provide savings in the pipe material consumption in pipe manufacturing. In addition, the lowered thickness may facilitate the deformation of the outer pipe into the folded installation shape after manufacturing, as well as opening it into the open use shape. Further, lower pipe wall thickness may advantageously improve the thermal contact between the bedrock and the outer flow channel. With suitable thickness selection and the design of the folded installation shape, the lowered thickness in the inwards installation shape may also facilitate the staying of the outer pipe in its folded installation shape until it is intentionally opened to its open use shape.

The difference between the first and the second pipe wall thicknesses may depend on, for example, the absolute pipe wall thickness and the depth of the heat well into which the outer pipe is designed to be inserted. For example, in the case of an outer pipe having in its open use shape a diameter of 100 - 120 mm, for example, about 110 mm, and the first pipe wall thickness of the pipe wall being 2 to 4 mm, the second pipe wall thickness may be in the range of 4 to 6 mm, respectively.

In the example of Figure 1, the inwards folded pipe wall section has a substantially constant wall thickness, namely, the first pipe wall thickness T₁. Similarly, outside the inwards folded pipe wall section, the wall thickness is substantially constant, i.e. the second thickness T₂.

In other embodiments, wall thicknesses in the inwards folded pipe wall section and/or outside that may vary, as long as there are one or more locations of a first pipe wall thickness in the inwards folded pipe wall section and one or more locations of a higher, second pipe wall thickness outside the inwards folded pipe wall section.

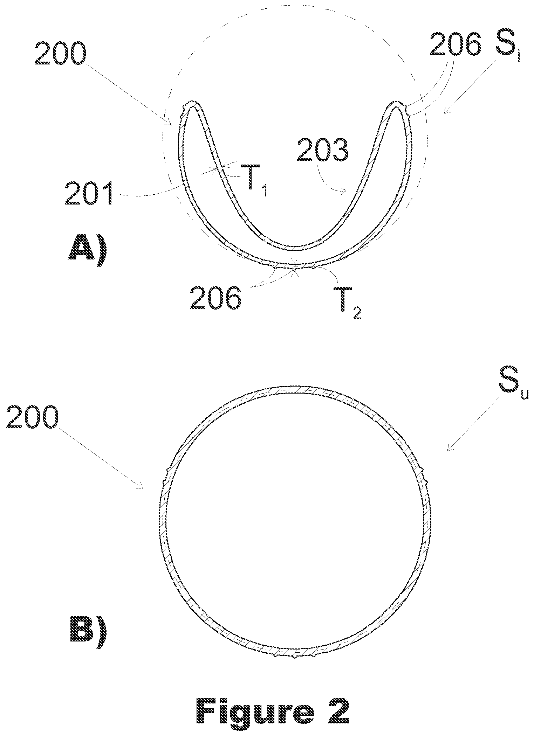

One example of varying the pipe wall thickness outside the inwards folded pipe wall section is illustrated in Figure 2.

The outer pipe 200 of Figure 2 differs from the outer pipe of Figure 1 in that the pipe wall 201 has a main or body part or layer in which the pipe wall has a basically constant thickness throughout the circumference thereof, namely the first thickness T₁. However, there are outwards extending protuberances 206 on the pipe wall, locally increasing the pipe wall thickness outside the inwards folded pipe wall section 203. Thereby, at the protuberances, the pipe wall has a second pipe wall thickness T₂ which is higher than the first pipe wall thickness T₁ at the inwards folded pipe wall section and elsewhere outside the protuberances.

The protuberances may be elongated structures extending in the longitudinal direction of the outer pipe.

The protuberances form the outermost points of the perimeter of the pipe wall. When the outer pipe approaches the wall of the borehole during the installation, the protuberances may first come into contact with the wall. They may then protect the rest of the pipe wall from wearing by serving as sacrificial structures thereon.

The protuberances may be positioned at locations of the pipe wall which most likely, taking into account the overall shape of the pipe wall cross section in the folded installation shape, contacts the wall of the borehole during the insertion of the outer pipe into the heat well. The locations where the protuberances are positioned in the example of Figure 2 are illustrative examples of this only. In practice, in various embodiments, the number and locations of the protuberances may be selected in any appropriate manner. Instead of having them only at some locations, there may be protuberances distributed all over the pipe wall outside the inwards folded pipe wall section (s) .

In other embodiments, instead of protuberances, the pipe wall may have, outside the inwards folded pipe wall section, thickened sections with a second pipe wall thickness higher than the first thickness at the inwards folded pipe wall section.

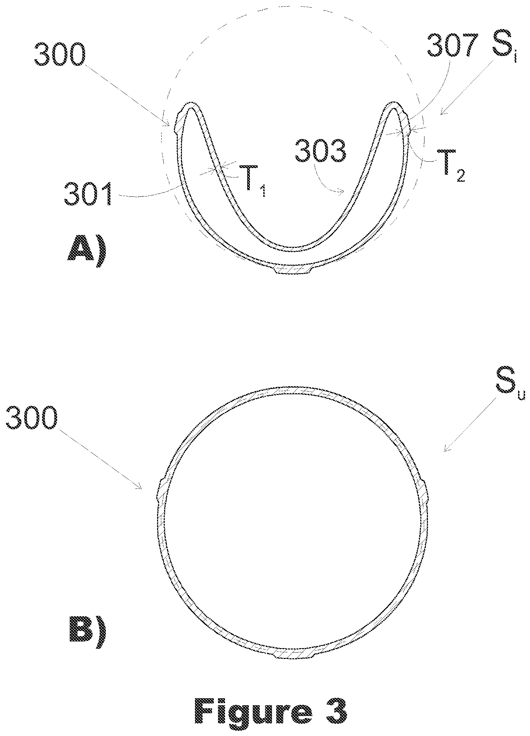

In the example of Figure 3, the pipe wall 301 of the outer pipe 300 has such thickened sections 307 outside the inwards folded pipe wall section 303 at which thickened sections the pipe wall has a second pipe wall thickness T₂ exceeding the first pipe wall thickness T₁. Otherwise, the outer pipe 300 of Figure 3 may be in accordance with any of those discussed above with reference to Figures 1 and 2.

In the example of Figure 3, there are three thickened section in the pipe wall of the outer pipe. In other embodiments, an outer pipe may have any appropriate number of thickened pipe wall sections outside the inwards folded pipe wall section.

In various embodiments, the higher second pipe wall thickness may be implemented by the pipe wall outside the inwards folded pipe wall section having a constant higher thickness, having one or more thickened sections, and/or having one or more protuberances locally increasing the pipe wall thickness.

In the examples of Figures 1 to 3, the pipe wall of the outer pipe has one inwards folded pipe wall section. In other embodiments, irrespective of the way of implementing the higher second pipe wall thickness and the lower first pipe wall thickness, the pipe wall may comprise two or more inwards folded pipe wall sections. In some embodiments, two of such inwards folded pipe wall sections may be folded towards each other, whereby the two inwards folded pipe wall sections serve as the "opposite pipe wall sections" for each other.

The outer pipe 400 of Figure 4, illustrated in its open use shape Sᵤ in drawing A), may be basically in accordance with any of the embodiments discussed above. For example, although not illustrated, the different first and second thicknesses of the pipe wall may be implemented in any appropriate manner, such as by means of protuberances, thickened sections of the pipe wall, or a continuously thicker pipe wall outside any inwards folded pipe wall section.

However, differently from the examples of Figures 1 to 3 and the embodiments discussed with reference to them, the pipe wall 401 of the outer pipe 400 comprises elongated recesses 408 at which the cross-section of the outer pipe deviates locally inwards from the circle 402 which the pipe wall otherwise follows. The recesses are implemented as elongated structures or shapes extending in the longitudinal direction of the outer pipe.

The recesses 408 increase the overall length of the perimeter of the pipe wall in the cross section of the pipe. Thus, the overall perimeter of the pipe wall is longer than the perimeter of the circle the pipe wall follows.

As a result of the "excess" length of the perimeter of the pipe wall, the outer pipe 400 may be forced into an expanded use shape S_{u,ext} as illustrated in drawing B) of Figure 4. In the expanded use shape, as a result of at least partial straightening of the recesses, the substantially circular cross section of the outer pipe 40 outside the recesses 408 is larger than the circle 402 the major part of the pipe wall 401 follows in its open use shape.

Forcing of the outer pipe into its expanded use shape may be carried out, for example, by means of increased internal pressure supplied within the outer pipe after first opening it to its open use shape.

The expanded use shape enables the outer pipe 400 being first installed into a geothermal well which is slightly larger than the outer dimensions of the outer pipe in its open use shape, and being thereafter forced into its expanded use shape. Then, in the expanded use shape, the outer pipe may be set, outside any possible recesses not having been fully opened, tightly against the wall of the borehole.

At a recess 408, the pipe wall 401 may have a thickness which is the same as, or smaller than, the first pipe wall thickness in the inwards folded pipe wall section(s) outside the recesses. Smaller thickness may facilitate the opening of the recesses, thus expanding of the outer pipe into its expanded use shape. Such smaller thickness may be called as a third pipe wall thickness.

In various embodiments, any appropriate number and arrangement of recesses discussed above with reference to Figure 4 may be present in outer pipes which are otherwise in accordance with any of those discussed above with reference to Figures 1 to 3.

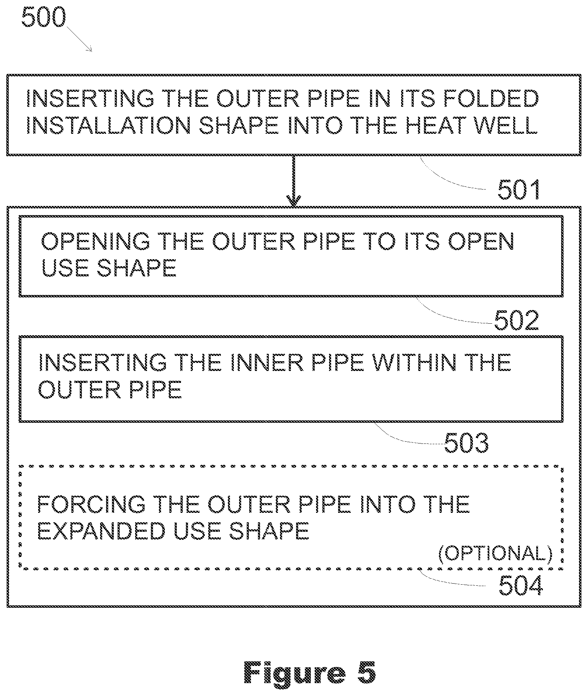

Any outer pipe described above may be used for installing a coaxial geothermal collector into a heat well in the method of Fig. 5.

In a first step of the method 501, the outer pipe in its installation shape is inserted into the heat well.

In step 502, the outer pipe inserted into the geothermal well is opened to its use shape.

Any suitable method may be used for opening the outer pipe. For example, for opening a polyethylene pipe, heat and/or pressure may be utilized. It may for example be possible to cause the open pipe to open just by supplying a liquid, for example water or a liquid heat transfer medium used for the heat transfer, at a sufficiently elevated temperature into the outer pipe. The hydrostatic pressure of the liquid accumulating in the pipe may then together with the heat may cause the outer pipe to open to its use shape.

To facilitate the opening, a pressurized liquid may be fed to the outer pipe, possibly at an elevated temperature. By means of the pressurization, a sufficient opening force may be ensured regardless of the hydrostatic pressure. As another fact, the pressurized liquid may be used for opening the outer pipe also at the normal temperature.

The elevated temperature refers to a substantially higher temperature than the normal temperature of 20 °C. The elevated temperature may be for example at least 50 °C or at least 70 °C, for example approximately 80 °C.

The pressurizing refers to a substantially higher pressure than the standard atmosphere of appr. 1 bar. Such higher pressure may be for example at least 2 bar.

In step 503 of the method of Fig. 5, the inner pipe of the heat transfer piping is inserted into the geothermal well, within the outer pipe opened to its use shape.

The inner pipe may be inserted within the outer pipe after the outer pipe has been opened to the use shape along the full length thereof. Alternatively, it is possible to insert part of the inner pipe within the outer pipe already in a stage when the outer pipe has been opened only along a part of the length thereof. Thus, the inner pipe may be inserted further within the outer pipe either step by step or continuously while the outer pipe is opening to the use shape, i.e. while the portion of the outer pipe which has opened to the use shape is expanding towards the bottom of the geothermal well. The second and the third step 502, 503 of the method may thus be performed either separately from each other or at least partly simultaneously or alternately so as to proceed step by step. The at least partly simultaneously performed second and third step are a particularly preferred approach in an embodiment in which a possibly pressurized liquid or gas is fed at an elevated temperature to the outer pipe via the inner pipe.

In a fourth, optional step 504 of the method, the outer pipe is forced from its use shape to its expanded use shape. This step may thus be present in the case of the outer pipe comprising recesses discussed above with reference to Figure 4. In result of the expanding, the outer pipe may be arranged against the wall of the heat well and lock in place by means of friction. The forcing may be performed before the inner pipe has been inserted within the outer pipe, when the inner pipe has been partly inserted within the outer pipe, or when the inner pipe has been inserted within the outer pipe substantially along the full length thereof.

The pressure and/or elevated temperature of a liquid fed into the outer pipe may be utilized in the forcing into the expanded operating form.

It is obvious to a person skilled in the art that with the advancement of technology, the basic idea of the invention may be implemented in various ways. The invention and its embodiments are thus not limited to the examples described above, but they may vary within the scope of the claims.

## Claims

1. An outer pipe (100) for a coaxial geothermal collector (10), the outer pipe having a pipe wall (101) formed of a plastic material, and being configured to be inserted into a heat well bored in the bedrock while being folded into a folded installation shape Sᵢ with a substantially non-circular cross section, and to be opened in the heat well into an open use shape Sᵤₛₑ with a substantially circular cross section where the pipe wall (101) substantially follows a circle (102) having a circle diameter D_{C}; the pipe wall (101) having, in the folded installation shape, a maximum diameter Dₘₐₓ which is smaller than the circle diameter D_{C}, and comprising an inwards folded pipe wall section (103) folded inwards towards an opposite pipe wall section (104) such that the shortest distance Dₘᵢₙ between the inwards folded pipe wall section and the opposite pipe wall section is less than or equal to 50 % of the circle diameter; the pipe wall (101) optionally comprising one or more elongated recesses (408) extending in the longitudinal direction of the outer pipe, at which recess the cross-section of the outer pipe in its open use shape deviates locally inwards, **characterized in that** outside any recesses, the inwards folded pipe wall section (103) has a first pipe wall thickness T₁ and the pipe wall has, outside the inwards folded pipe wall section, a second pipe wall thickness T₂ which is higher than the first pipe wall thickness for improving the wear resistance of the part of the pipe wall (101) susceptible to being rubbed against the bedrock during the installation of the outer pipe into the heat well.

2. An outer pipe (100) as defined in claim 1, wherein the cross section of the folded installation shape Sᵢ is substantially in the form of a letter C or U.

3. An outer pipe (100) as defined in claim 1 or 2, wherein the pipe wall (101) has, outside the inwards folded pipe wall section (103), substantially constant thickness.

4. An outer pipe (200) as defined in any of claims 1 to 3, wherein the pipe wall (202) has, outside the inwards folded pipe wall section (203), an outwards extending protuberance (206) locally increasing the pipe wall thickness.

5. An outer pipe (200) as defined in claim 4, wherein the protuberance (206) extends as an elongated structure in the longitudinal direction of the outer pipe.

6. An outer pipe (300) as defined in any of claims 1 to 5, wherein the pipe wall (301) has, outside the inwards folded pipe wall section (303), a strengthening section (307) with a pipe wall thickness exceeding the first pipe wall thickness T₁.

7. An outer pipe (100) as defined in any of claims 1 to 6, initially manufactured into the open use shape by extruding.

8. A coaxial geothermal collector (10) comprising an outer pipe (100) as defined in any of claims 1 to 7 in its open use shape Sᵤ, and an inner pipe (110) inserted within the outer pipe.

9. A method (500) for installing a coaxial geothermal collector according to claim 8 in a heat well bored in the bedrock, the method comprising inserting an outer pipe as defined in any of claims 1 to 7 in its folded installation shape into the heat well (501); and opening the thereby inserted outer pipe into its open use shape for enabling insertion of an inner pipe into the outer pipe (502).

## Patentansprüche

1. Außenrohr (100) für eine koaxialen geothermischen Kollektor (10), wobei das Außenrohr eine Rohrwand (101) hat, die aus einem Kunststoffmaterial gebildet ist, und dazu konfiguriert ist, in eine Wärmequelle eingesetzt zu werden, die in das Felsgestein gebohrt ist, während es in eine gefaltete Installationsgestalt Sᵢ mit einem im Wesentlichen nicht-kreisförmigen Querschnitt gefaltet ist, und in der Wärmequelle in eine offene Gebrauchsgestalt Sᵤₛₑ mit einem im Wesentlichen kreisförmigen Querschnitt geöffnet zu werden, wo die Rohrwand (101) im Wesentlichen einem Kreis (102) mit einem Kreisdurchmesser D_{C} folgt; wobei die Rohrwand (101) in der gefalteten Installationsgestalt einen maximalen Durchmesser Dₘₐₓ hat, der kleiner ist als der Kreisdurchmesser D_{C}, und einen einwärts gefalteten Rohrwandabschnitt (103) umfasst, der einwärts in Richtung eines gegenüberliegenden Rohrwandabschnitts (104) derart gefaltet ist, dass der kürzeste Abstand Dₘᵢₙ zwischen dem einwärts gefalteten Rohrwandabschnitt und dem gegenüberliegenden Rohrwandabschnitt kleiner oder gleich 50% des Kreisdurchmessers ist; wobei die Rohrwand (101) optional eine oder mehr längliche Aussparungen (408) umfasst, die sich in der Längsrichtung des Außenrohrs erstrecken, bei welcher Aussparung der Querschnitt des Außenrohrs in seiner offenen Gebrauchsgestalt lokal einwärts abweicht,
**dadurch gekennzeichnet, dass** außerhalb jeglicher Aussparungen der einwärts gefaltete Rohrwandabschnitt (103) eine erste Rohrwanddicke T₁ hat, und die Rohrwand außerhalb des einwärts gefalteten Rohrwandabschnitts eine zweite Rohrwanddicke T₂ hat, die größer als die erste Rohrwanddicke ist, um die Verschleißfestigkeit des Teils der Rohrwand (101) zu verbessern, der dazu ausgelegt ist, während der Installation des Außenrohrs in der Wärmequelle gegen das Felsgestein gerieben zu werden.

2. Außenrohr (100) nach Anspruch 1, wobei der Querschnitt der gefalteten Installationsgestalt Sᵢ im Wesentlichen in der Form eines Buchstabens C oder U ist.

3. Außenrohr (100) nach Anspruch 1 oder 2, wobei die Rohrwand (101) außerhalb des einwärts gefalteten Rohrwandabschnitts (103) eine im Wesentlichen konstante Dicke hat.

4. Außenrohr (200) nach einem der Ansprüche 1 bis 3, wobei die Rohrwand (202) außerhalb des einwärts gefalteten Rohrwandabschnitts (203) einen sich auswärts erstreckenden Vorsprung (206) hat, der lokal die Rohrwanddicke erhöht.

5. Außenrohr (200) nach Anspruch 4, wobei der Vorsprung (206) sich als eine längliche Struktur in der Längsrichtung des Außenrohrs erstreckt.

6. Außenrohr (300) nach einem der Ansprüche 1 bis 5, wobei die Rohrwand (301) außerhalb des einwärts gefalteten Rohrwandabschnitts (303) einen Verstärkungsabschnitt (307) mit einer Rohrwanddicke hat, die die erste Rohrwanddicke T₁ übersteigt.

7. Außenrohr (100) nach einem der Ansprüche 1 bis 6, das anfänglich durch Extrudieren in die offene Gebrauchsgestalt hergestellt ist.

8. Koaxialer geothermischer Kollektor (10), umfassend ein Außenrohr (100) nach einem der Ansprüche 1 bis 7 in seiner offenen Gebrauchsgestalt Sᵤ, und ein Innenrohr (110), das in das Außenrohr eingesetzt ist.

9. Verfahren (500) zum Installieren eines koaxialen geothermischen Kollektors nach Anspruch 8 in einer Wärmequelle, die in das Felsgestein gebohrt ist, wobei das Verfahren ein Einsetzten eines Außenrohrs nach einem der Ansprüche 1 bis 7 in seiner gefalteten Installationsgestalt in die Wärmequelle (501) umfasst; und Öffnen des hierbei eingesetzten Außenrohrs in seine offene Gebrauchsgestalt, um ein Einsetzen eines Innenrohrs in das Außenrohr (502) zu ermöglichen.

## Revendications

1. Tuyau externe (100) pour un collecteur géothermique coaxial (10), le tuyau externe présentant une paroi (101) de tuyau formée d'un matériau plastique, et étant configuré pour être inséré dans un puits thermique foré dans un fond rocheux tout en étant replié dans une forme d'installation repliée Sᵢ avec une section transversale sensiblement non circulaire, et pour s'ouvrir dans le puits thermique en une forme d'utilisation ouverte Sᵤₛₑ avec une section transversale sensiblement circulaire où la paroi (101) de tuyau suit sensiblement un cercle (102) présentant un diamètre de cercle D_{C} ;la paroi (101) de tuyau présentant, dans la forme d'installation repliée, un diamètre maximum Dₘₐₓ qui est inférieur au diamètre de cercle D_{c}, et comprenant une section (103) de paroi de tuyau repliée vers l'intérieur qui est repliée vers l'intérieur vers une section (104) de paroi de tuyau opposée de sorte que la distance la plus courte Dₘᵢₙ entre la section de paroi de tuyau repliée vers l'intérieur et la section de paroi de tuyau opposée soit inférieure ou égale à 50 % du diamètre de cercle ; la paroi (101) de tuyau comprenant facultativement un ou plusieurs évidements allongés (408) s'étendant dans la direction longitudinale du tuyau externe, évidements au niveau desquels la section transversale du tuyau externe dans sa forme d'utilisation ouverte s'écarte localement vers l'intérieur,
**caractérisé en ce que**, en dehors de tout évidement, la section (103) de paroi de tuyau repliée vers l'intérieur présente une première épaisseur T₁ de paroi de tuyau et la paroi de tuyau présente, en dehors de la section de paroi de tuyau repliée vers l'intérieur, une seconde épaisseur T₂ de paroi de tuyau qui est supérieure à la première épaisseur de paroi de tuyau afin d'améliorer la résistance à l'usure de la partie de la paroi (101) de tuyau susceptible d'être frottée contre le fond rocheux lors de l'installation du tuyau externe dans le puits thermique.

2. Tuyau externe (100) selon la revendication 1, dans lequel la section transversale de la forme d'installation repliée Sᵢ est sensiblement sous la forme de la lettre C ou U.

3. Tuyau externe (100) selon la revendication 1 ou la revendication 2, dans lequel la paroi (101) de tuyau présente, en dehors de la section (103) de paroi de tuyau repliée vers l'intérieur, une épaisseur sensiblement constante.

4. Tuyau externe (200) selon l'une quelconque des revendications 1 à 3, dans lequel la paroi (202) de tuyau présente, en dehors de la section (203) de paroi de tuyau repliée vers l'intérieur, une protubérance (206) s'étendant vers l'extérieur augmentant localement l'épaisseur de paroi de tuyau.

5. Tuyau externe (200) selon la revendication 4, dans lequel la protubérance (206) s'étend sous la forme d'une structure allongée dans la direction longitudinale du tuyau externe.

6. Tuyau externe (300) selon l'une quelconque des revendications 1 à 5, dans lequel la paroi (301) de tuyau présente, en dehors de la section (303) de paroi de tuyau repliée vers l'intérieur, une section de renfort (307) ayant une épaisseur de paroi de tuyau supérieure à la première épaisseur T₁ de paroi de tuyau.

7. Tuyau externe (100) selon l'une quelconque des revendications 1 à 6, fabriqué initialement dans la forme d'utilisation ouverte par extrusion.

8. Collecteur géothermique coaxial (10) comprenant un tuyau externe (100) selon l'une quelconque des revendications 1 à 7 dans sa forme d'utilisation ouverte Sᵤ, et un tuyau intérieur (110) inséré à l'intérieur du tuyau externe.

9. Procédé (500) d'installation d'un collecteur géothermique coaxial selon la revendication 8 dans un puits thermique foré dans un fond rocheux, le procédé comprenant l'insertion d'un tuyau externe selon l'une quelconque des revendications 1 à 7 dans sa forme d'installation repliée dans le puits thermique (501) ; et l'ouverture du tuyau externe ainsi inséré jusqu'à sa forme d'utilisation ouverte pour permettre l'insertion d'un tuyau intérieur dans le tuyau externe (502).
